# EUROPÄISCHE PATENTANMELDUNG

(11) **EP 1 980 446 A1**
(43) Veröffentlichungstag der Anmeldung: **15.10.2008**
(21) Anmeldenummer: 08004518.0
(22) Anmeldetag: 12.03.2008
(51) Int. Cl.: B60P 7/08

(54) **Vorrichtung zum Befestigen von Ladegut in einem Transportmittel**

(30) Priorität: 13.04.2007 DE 102007018254
(71) Anmelder: BOS GmbH & Co. KG, 73760 Ostfildern (DE)
(72) Erfinder: Bohlke, Hartmut, 42369 Wuppertal (DE); Göbbels, Andreas, 51515 Kürten (DE); Sitzler, Wolfgang, 42111 Wuppertal (DE)
(74) Vertreter: Dauster, Katja

(57) **Zusammenfassung**

Die Erfindung betrifft eine Vorrichtung zum Befestigen von Ladegut in einem Transportmittel umfassend mindestens eine Führungsschiene (1) und mindestens ein an der Führungsschiene (1) anbringbares Befestigungselement (2) mit einem Rastelement (22), wobei die Führungsschiene (1) ein im Wesentlichen C-förmiges Profil mit zwei Schultern (10) und einer Nut (11) aufweist, das Rastelement (22) in die Nut (11) einführbar ist das in die Nut eingeführte Rastelement (22) um eine im Wesentlichen parallel zur Längsachse (L) der Führungsschiene verlaufende Achse verschwenkbar ist, so dass zumindest eine Rastnase (23) des Rastelements (22) in einen durch mindestens eine der Schultern (10) gebildeten Hinterschnitt der Führungsschiene (1) greift und das Befestigungselement (2) an der Führungsschiene (1) zumindest in eine Hochrichtung der Führungsschiene arretiert ist.

## Beschreibung

Die Erfindung betrifft eine Vorrichtung zum Befestigen von Ladegut in einem Transportmittel umfassend mindestens eine Führungsschiene und mindestens ein an der Führungsschiene anbringbares Befestigungselement mit mindestens einem Rastelement.

Vorrichtungen zum Befestigen von Ladegut werden beispielsweise im Ladebereich von Transportfahrzeugen, Kombifahrzeugen oder dergleichen verwendet. Eine Vorrichtung zum Festklammern von Gurten oder Lasten an mehreren vorbestimmten Stellen ist beispielsweise aus der EP 1 108 608 B1 bekannt. Die Vorrichtung umfasst eine U-förmige Schiene, welche an der Wand eines Transportfahrzeugs angeordnet ist und vorbestimmte Festklammerstellen definierende Kerben aufweist. Die Vorrichtung umfasst weiter ein bewegliches Festklammerelement, das in einem Kanal der U-förmigen Schiene verschiebbar angeordnet ist und ein Riegel- oder Positionierteil aufweist, welches durch eine Feder vorgespannt ist, um in einer der Kerben aufgenommen und verriegelt zu werden. Eine Position zum Anbringen des Festklammerelements ist dabei nicht frei wählbar, sondern durch eine Anordnung der Kerben festgelegt.

Es ist weiter aus der DE 43 36 762 C1 eine Einrichtung zum Befestigen von Ladegut an Ladeflächen von Transportmitteln bekannt, welche eine Halteschiene und in der Halteschiene arretierbare Befestigungselemente umfasst. Die Befestigungselemente weisen ein Klemmteil zum Einsetzen in die Halteschiene auf, wobei die Halteschiene ein im Wesentlichen trapezförmiges Profil mit sich zur Öffnung hin verjüngendem Querschnitt besitzt und das Klemmteil aus einem elastisch deformierbaren Material besteht und eine Zapfenform besitzt, deren Breite geringer ist und deren Länge größer ist als die lichte Weite der Öffnung der Halteschiene. Zum Verrasten in der Halteschiene wird das Klemmteil um eine parallel zur Hochrichtung der Halteschiene verlaufende Achse um ca. 90° gedreht, so dass das Klemmteil gegen das trapezförmige Profil der Halteschiene drückt und so arretiert wird.

Es ist Aufgabe der vorliegenden Erfindung, eine Vorrichtung zum Befestigen von Ladegut in einem Transportmittel zu schaffen, durch welche eine einfache, schnelle und flexible Befestigung von Ladegut in dem Transportmittel möglich ist.

Diese Aufgabe wird gelöst durch eine Vorrichtung zum Befestigen von Ladegut an einem Transportmittel umfassend mindestens eine Führungsschiene und mindestens ein an der Führungsschiene anbringbares Befestigungselement mit einem Rastelement, wobei die Führungsschiene ein im Wesentlichen C-förmiges Profil mit zwei Schultern und einer Nut aufweist, das Rastelement in die Nut einführbar ist und das in die Nut eingeführte Rastelement um eine im Wesentlichen parallel zur Längsachse der Führungsschiene verlaufende Achse verschwenkbar ist, so dass zumindest eine Rastnase des Rastelements in einen durch mindestens eine der Schultern gebildeten Hinterschnitt der Führungsschiene greift und das Befestigungselement an der Führungsschiene zumindest in eine Hochrichtung der Führungsschiene arretiert ist.

Das Befestigungselement ist entlang der Längsachse der Führungsschiene an einer beliebigen Stelle der Führungsschiene an dieser arretierbar. Die Führungsschiene ist in einer Ausgestaltung ohne Kerben oder dergleichen, welche bestimmte Befestigungsstellen definieren, ausgebildet. Ein Sichern des Befestigungselements an der Führungsschiene erfolgt durch Verschwenken des Rastelements, so dass eine Rastnase in einen Hinterschnitt der Führungsschiene greift. Dadurch ist zumindest eine Bewegung des Befestigungselements in eine Hochrichtung gesperrt. Durch Aufbringen einer Zugkraft an dem Befestigungselement in Richtung der Hochrichtung ist dabei auch ein Verschieben des Befestigungselements entlang der Führungsschiene aufgrund einer zumindest zwischen der Rastnase und der Führungsschiene wirkenden Kraft, insbesondere einer Reibkraft verhinderbar. Die Größe der Reibkraft hängt dabei von einer für die Führungsschiene und das Rastelement verwendeten Materialpaarung und einer aufgebrachten Kraft in Hochrichtung ab. Zudem ist die Kraft über eine Form der Kontaktfläche zwischen dem Rastelement und der Führungsschiene beeinflussbar.

In einer Ausgestaltung der Erfindung ist das Befestigungselement eine Lastöse. An Lastösen lassen sich Gurte und dergleichen auf einfache Weise befestigen.

In einer weiteren Ausgestaltung der Erfindung ist das Rastelement einteilig mit der Lastöse ausgebildet. Das Befestigungselement ist dabei in einer Ausführungsform aus einem Teil gebildet. Durch Verschwenken der Lastöse wird das einteilig mit der Lastöse ausgebildete Rastelement ebenfalls verschwenkt und das Befestigungselement an der Führungsschiene für ein Verzurren von Gegenständen an der Lastöse arretiert.

In einer weiteren Ausgestaltung der Erfindung weist das Befestigungselement ein Halteelement auf, wobei das Rastelement schwenkbar an dem Halteelement gelagert ist. Das Griffteil einer Lastöse und das Rastelement sind dabei in einem Ausführungsbeispiel einteilig gestaltet und an dem Halteelement gemeinsam gelagert und gemeinsam handhabbar. In anderen Ausgestaltungen sind das Griffteil oder ein Bügel der Lastöse und das Rastelement an getrennten Lagerstellen an dem Halteelement befestigt.

In einer weiteren Ausgestaltung der Erfindung weist das Halteelement mindestens einen Vorsprung auf, welcher auf einer Außenseite mindestens einer Schulter anliegt, wenn das Rastelement in die Nut eingeführt ist. In einem Ausführungsbeispiel ist dabei das Rastelement derart angeordnet, dass die Schulter der Schiene zwischen dem Vorsprung und der Rastnase verklemmbar ist. In einer anderen Ausgestaltung ist das Befestigungselement so an der Führungsschiene anordenbar, dass das Rastelement in die Nut eingeführt wird, wobei durch Verschieben des Haltelements entlang der Nut die Position des Befestigungsmittels entlang der Führungsschiene geeignet festlegbar ist.

In einer weiteren Ausgestaltung der Erfindung weist das Halteelement mindestens eine Haltenase auf, durch welche das Halteelement auf einen die Schulter begrenzenden Rand aufsteckbar ist. Durch die Haltenase ist eine Sicherheit der Arretierung des Befestigungsmittels in der Nut weiter erhöhbar. Ein Aufstecken kann dabei durch eine geeignete Schwenkbewegung erfolgen. In anderen Ausführungsbeispielen ist die Haltenase in Axialrichtung auf die Führungsschiene aufsteckbar.

In einer weiteren Ausgestaltung der Erfindung ist das Rastelement nach Art einer Flunke eines Klappankers ausgebildet. Das Befestigungsmittel umfasst dabei eine Flunke oder mehrere als Flunken oder Schaufeln gestaltete Rastelemente, welche zwischen einer ersten Position, in welcher sie im Wesentlichen parallel zu einer Hochrichtung der Führungsschiene ausgerichtet sind, und einer zweiten Position, in welcher sie im Wesentlichen quer zur Hochrichtung, vorzugsweise in etwa rechtwinklig, ausgerichtet sind, verschwenkbar sind. Wenn die Rastelemente in der ersten Position angeordnet sind, so ist das Befestigungselement zumindest entlang der Führungsschiene verschiebbar und in einem Ausführungsbeispiel auch aus der Nut der Führungsschiene entnehmbar. Zum Arretieren des Befestigungselements werden die Rastelemente in die zweite Position verschwenkt.

In einer weiteren Ausgestaltung der Erfindung ist das Rastelement zum Einführen in die Nut in einem Gehäuse aufgenommen. Durch das Gehäuse sind die Rastelemente in der ersten Position sicherbar, wobei durch Verschieben des Gehäuses die Rastelemente aus der ersten Position gelöst werden. Die Rastelemente sind in einem Ausführungsbeispiel in Richtung der zweiten Position durch ein Zwangsmittel, wie eine Feder oder dergleichen, vorgespannt. Durch das Gehäuse sind die Rastelemente entgegen der Kraft des Zwangsmittels in die erste Position verschiebbar, so dass die Arretierung lösbar ist.

In einer weiteren Ausgestaltung der Erfindung ist das Rastelement zwischen einer ersten Position zum Einführen in die Nut aus einer Hochrichtung der Führungsschiene und einer zweiten Position zum Hintergreifen der Schulter der Lastschiene verschwenkbar. Das Befestigungsmittel ist dabei durch Anordnen des Rastelements in der ersten Position an einer beliebigen Stelle in die Führungsschiene einsetzbar und/oder der Führungsschiene entnehmbar.

In einer weiteren Ausgestaltung der Erfindung ist das Rastelement in mindestens einer Position durch ein Schließelement, insbesondere eine Schließfalle oder dergleichen, gesichert. Als Schließfalle wird dabei eine Falle bezeichnet, welche beim Bewegen eines Rastelements in die Falle schließt, insbesondere einrastet, so dass eine Bewegung des Rastelements aus der Falle gesperrt ist.

In einer weiteren Ausgestaltung der Erfindung ist die Sicherung durch das Schließelement mittels eines Bedienelements, insbesondere mittels einer Betätigungstaste oder dergleichen, aufhebbar. Durch Betätigen des Bedienelements, beispielsweise durch Drücken einer Taste, ist die Sicherung des Schließelements aufhebbar und beispielsweise das Rastelement einer Schließfalle entnehmbar. Die Taste kann dabei als sogenanntes push-push Element ausgebildet sein, welches durch Drücken in eine Richtung sowohl gesperrt als auch gelöst wird.

In einer weiteren Ausgestaltung der Erfindung ist das Rastelement mittels eines axial verschiebbaren Betätigungselements, insbesondere mittels eines Tastschalters oder dergleichen, verschwenkbar. An dem Befestigungselement sind hierfür geeignete Mittel vorgesehen, welche eine Axialbewegung des Betätigungselements in eine Verschwenkbewegung der Rastelemente umsetzen.

Weitere Vorteile der Erfindung ergeben sich aus der nachfolgenden Beschreibung von Ausführungsbeispielen der Erfindung, die in den Zeichnungen schematisch dargestellt sind. Für gleiche oder ähnliche Bauteile werden in den Zeichnungen einheitliche Bezugszeichen verwendet. Sämtliche aus den Ansprüchen, der Beschreibung oder den Zeichnungen hervorgehende Merkmale und/oder Vorteile, einschließlich konstruktive Einzelheiten, räumliche Anordnungen und Verfahrensschritte, können sowohl für sich als auch in den verschiedensten Kombinationen erfindungswesentlich sein. Als Teil eines Ausführungsbeispiels beschriebene oder dargestellte Merkmale können ebenso in einem anderen Ausführungsbeispiel verwendet werden, um eine weitere Ausführungsform der Erfindung zu erhalten.

In den Zeichnungen zeigen:
- Fig. 1:: eine perspektivische Darstellung einer erfindungsgemäßen Vorrichtung umfassend eine Führungsschiene und ein Befestigungselement gemäß einem ersten Ausführungsbeispiel der Erfindung;
- Fig. 2:: eine perspektivische Darstellung des Befestigungselements gemäß Fig. 1;
- Fig. 3:: eine vereinfachte Schnittdarstellung der Vorrichtung gemäß Fig. 1 beim Arretieren des Befestigungsmittels;
- Fig. 4:: eine vereinfachte Schnittdarstellung einer erfindungsgemäßen Vorrichtung umfassend eine Führungsschiene und ein Befestigungselement gemäß einem zweiten Ausführungsbeispiel der Erfindung;
- Fig. 5:: eine perspektivische Darstellung eines erfindungsgemäßen Befestigungselements gemäß einem dritten Ausführungsbeispiel der Erfindung;
- Fig. 6:: eine teilweise geschnittene Seitenansicht des Befestigungselements gemäß Fig. 5 in einer ersten Position;
- Fig. 7:: eine teilweise geschnittene Seitenansicht des Befestigungselements gemäß Fig. 5 in einer zweiten Position;
- Fig. 8:: eine perspektivische Darstellung eines erfindungsgemäßen Befestigungselements gemäß einem vierten Ausführungsbeispiel der Erfindung;
- Fig. 9:: eine teilweise geschnittene Seitenansicht des Befestigungselements gemäß Fig. 8 in einer ersten Position und
- Fig. 10:: eine teilweise geschnittene Seitenansicht des Befestigungselements gemäß Fig. 5 in einer zweiten Position.

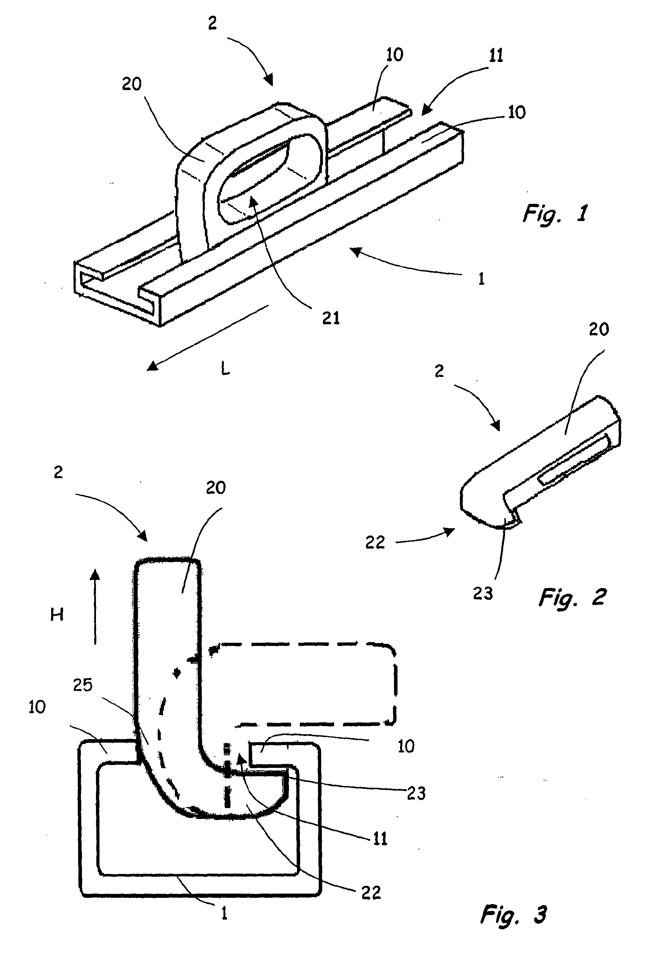

Fig. 1 ist eine perspektivische Darstellung einer erfindungsgemäßen Vorrichtung umfassend eine Führungsschiene 1 und ein Befestigungselement 2 gemäß einem ersten Ausführungsbeispiel der Erfindung. Die Führungsschiene 1 weist ein im Wesentlichen C-förmiges Profil mit zwei zueinander parallelen Schultern 10 auf, wobei eine Nut 11 gebildet ist, welche sich in Längsachse L der Führungsschiene 1 erstreckt. Die Führungsschiene 1 ist beispielsweise an einem Boden eines nicht dargestellten Kraftfahrzeugs oder an einer Wand eines ebenfalls nicht dargestellten Transporters anbringbar. Dabei können mehrere Führungsschienen 1 vorgesehen sein, welche an dem Boden und/oder an den Wänden angebracht sind. An der Führungsschiene 1 ist das Befestigungselement 2 arretierbar. Das dargestellte Befestigungselement 2 ist als Lastöse mit einem Bügel oder Griffteil 20 mit einer Öffnung 21 gestaltet. Die Öffnung 21 dient dabei zum einen einer einfachen Handhabung, zum anderen der Befestigung eines Lastgurts oder dergleichen.
Fig. 2 ist eine perspektivische Darstellung des Befestigungselements 2 gemäß Fig. 1. Das dargestellte Befestigungselement 2 ist in einem Querschnitt im Wesentlichen L-förmig, wobei die L-Form durch das Griffteil 20 und ein einteilig mit dem Griffteil gestaltetes Rastelement 22 mit einer Rastnase 23 gebildet ist. Das Befestigungselement 2 ist beispielsweise als Kunststoffspritzgussteil oder dergleichen fertigbar.

Fig. 3 zeigt schematisch ein Anbringen des Befestigungselements 2 an der Führungsschiene 1. Wie in Fig. 3 erkennbar, ist das Griffteil 20 und damit das einteilig mit dem Griffteil 20 gestaltete Rastelement 22 um eine gedachte, nicht dargestellte Achse verschwenkbar, welche im Wesentlichen parallel zu der in Fig. 1 dargestellten Längsachse L der Führungsschiene 1 verläuft. Zum Anbringen wird das Befestigungselement 2 in einer ersten, gestrichelt dargestellten Position durch einen Nutzer gehalten und durch eine im Wesentlichen parallel zu einer Hochrichtung H der Führungsschiene 1 verlaufendende Bewegung verschoben, so dass das Rastelement 22 in die Nut 11 eingeführt wird. Nach dem Einführen wird das Befestigungselement 2 durch einen Nutzer in die zweite, mit durchgezogenen Linien dargestellte Position bewegt, wobei das Rastelement 22 derart verschwenkt wird, dass die Rastnase 23 des Rastelements 22 in eine durch eine zugehörige Schulter 10 der Führungsschiene 1 gebildete Hinterschneidung greift. Dadurch wird das Befestigungselement 2 an der Führungsschiene 1 arretiert und eine Entnahme in die Hochrichtung H gesperrt. Das Befestigungselement 2 liegt dabei über eine Berührungsstelle 25 an einer zweiten, der ersten gegenüberliegenden Schulter 10 der Führungsschiene 1 an, so dass das Befestigungselement 2 in der Führungsschiene 1 verklemmt wird.

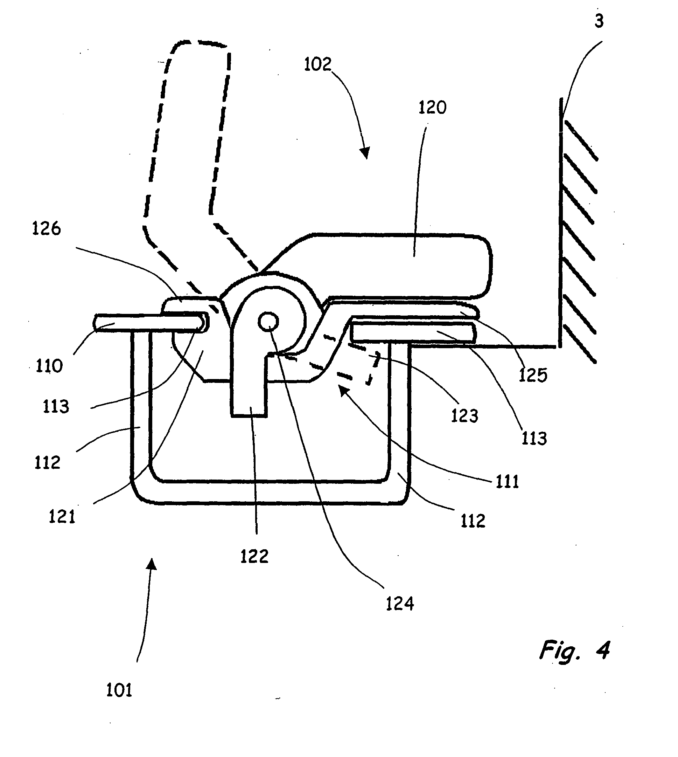

Fig. 4 zeigt schematisch eine Schnittdarstellung einer erfindungsgemäßen Vorrichtung umfassend eine Führungsschiene 101 und ein Befestigungselement 102 gemäß einem zweiten Ausführungsbeispiel der Erfindung. Die dargestellte Führungsschiene 101 ist in eine schematisch dargestellte Karosseriewandung 3 eingebracht. In einem Ausführungsbeispiel ist die Führungsschiene 101 fest an einer Karosseriewandung 3 angebracht, beispielsweise mit dieser verschweißt, vernietet oder verschraubt. Die Führungsschiene 101 weist ein im Wesentlichen C-förmiges Profil auf, wobei an Enden von Schenkeln 112 der C-förmigen Führungsschiene 101 Schultern 110 angeordnet sind, welche in der dargestellten Ausführungsform die Schenkel 112 in beide Richtungen überragen, so dass die Schultern 110 und die Schenkel 112 im Querschnitt im Wesentlichen T-förmig angeordnet sind. Das Befestigungselement 102 ist ebenfalls als Lastöse umfassend ein Griffteil 120 gestaltet. Das Griffteil 120 ist einteilig mit einem Rastelement 122 mit einer Rastnase 123 ausgebildet. Das Griffteil 120 und das Rastelement 122 sind in einem Halteelement 121 um eine Achse 124 schwenkbar gelagert. Das Halteelement 121 weist einen Vorsprung 125 auf, welcher auf einer Außenseite einer Schulter 110 der Führungsschiene 101 anliegt, wenn das Befestigungselement 102 wie dargestellt an der Führungsschiene 101 angeordnet ist. Das Halteelement 121 weist an einer zweiten, dem Vorsprung 125 gegenüberliegenden Seite eine Haltenase 126 auf, durch welche das Halteelement 121 auf einen die zweite Schulter 110 begrenzenden, einer Nut 111 zugewandten Rand 113 aufsteckbar ist. Das Halteelement 121 ist beispielsweise durch eine Schwenkbewegung an der Führungsschiene 101 anbringbar, wobei zunächst die Haltenase 126 auf den Rand 110 aufgesetzt wird. In anderen Ausführungsbeispielen ist das Halteelement 121 in Längsrichtung der Führungsschiene 101 auf diese aufschiebbar. Das Halteelement 121 ist verschiebbar an der Führungsschiene 101 befestigt. Durch Schwenken des Griffteils 120 und damit des einteilig mit dem Griffteil 120 verbundenen Rastelements 122 in die gestrichelt dargestellte Position, greift die Rastnase 123 des Rastelements 122 in den durch eine der Schultern 110 gebildeten Hinterschnitt der Führungsschiene 101, so dass das Befestigungselement 102 an der Führungsschiene 101 arretiert wird. Eine Arretierung ist dabei an einer beliebigen Stelle entlang der Längsachse der Führungsschiene 101 möglicht.

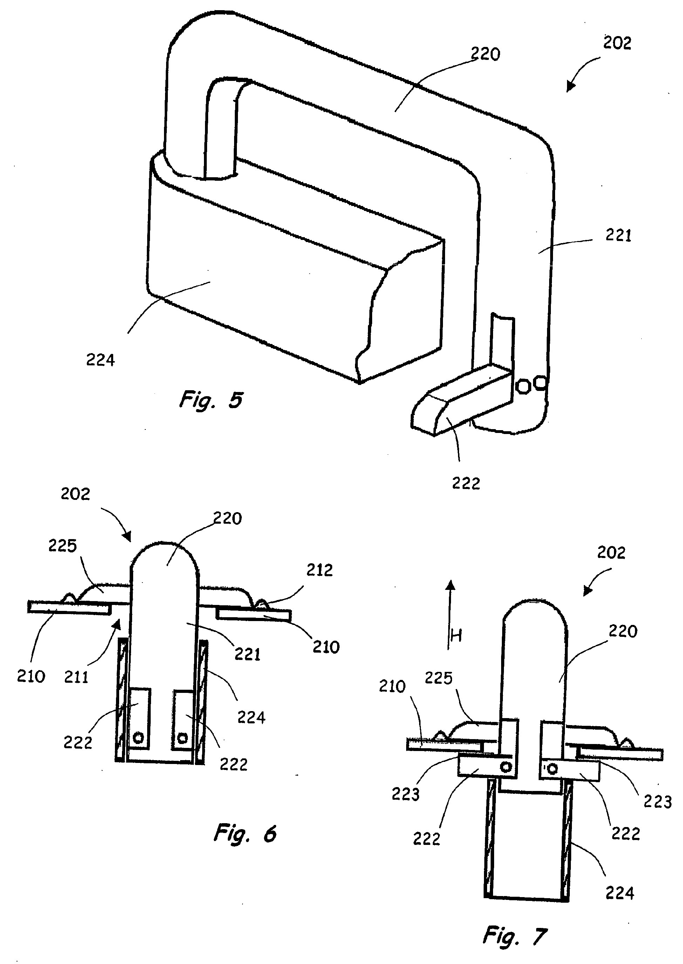

Fig. 5 zeigt schematisch eine perspektivische Darstellung eines erfindungsgemäßen Befestigungselements 202 gemäß einem dritten Ausführungsbeispiel der Erfindung. Das Befestigungselement 202 ist als Lastöse mit einem Bügel 220 gestaltet. An Schenkeln 221 des Bügels 220 sind jeweils zwei Rastelemente 222 nach Art einer Flunke eines Klappankers schwenkbar angeordnet, wobei in Fig. 5 nur ein Rastelement 222 sichtbar ist. Das Befestigungselement 202 umfasst weiter ein Gehäuse 224, in welchem die Schenkel 221 des Bügels 220 verschiebbar gelagert sind. Der Bügel 220 ist dabei relativ zu dem Gehäuse 224 zwischen einer in Fig. 6 dargestellten ersten Position und einer in Fig. 7 dargestellten zweiten Position verschiebbar. In der in Fig. 6 dargestellten ersten Position werden die Rastelemente 222 durch das Gehäuse 224 anliegend an den Schenkeln 221 des Bügels 220 gehalten, so dass das Befestigungselement 202 in eine Nut 211, welche durch Schultern 210 einer nicht dargestellten Führungsschiene gebildet ist, einführbar ist. Durch Bewegung des Bügels 220 in eine Hochrichtung H relativ zu dem Gehäuse 224 sind die Rastelemente 222 wie in Fig. 7 dargestellt in eine zweite Position verschwenkbar. Dabei greifen Rastnasen 223 der Rastelemente 222 in die durch die Schultern 210 gebildeten Hinterschneidungen, so dass das Befestigungselement 202 an der nicht dargestellten Führungsschiene arretiert wird. Das in Fig. 6 und 7 dargestellte Befestigungselement 202 weist weiter ein Halteelement 225 auf, welches auf der Außenseite der Schultern 210 zwischen zwei Führungsnasen 212 angeordnet ist.

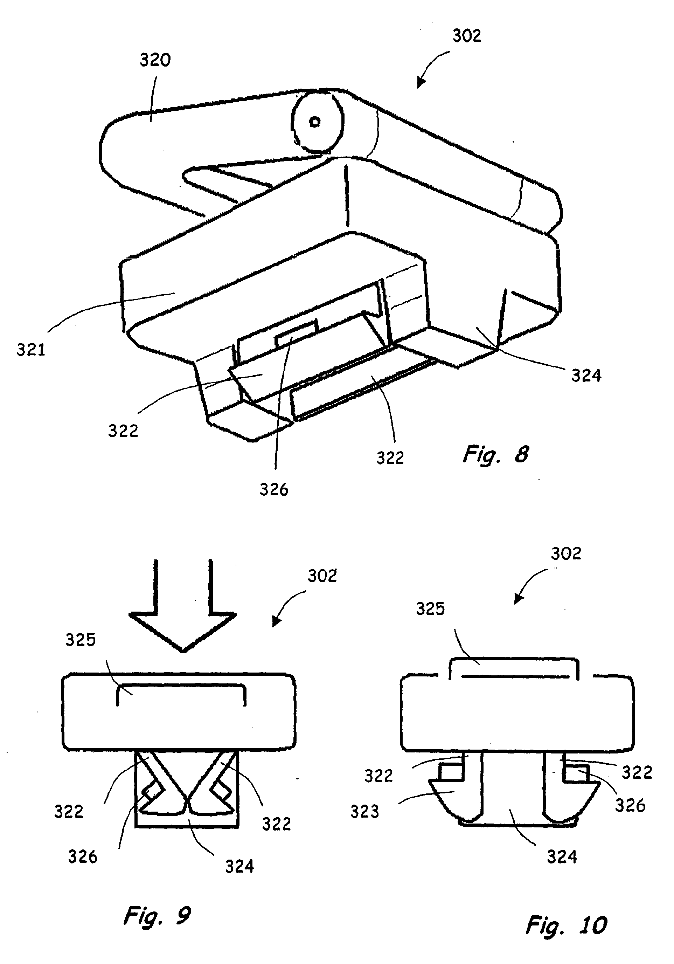

Fig. 8, 9 und 10 zeigen schematisch eine perspektivische Darstellung eines Befestigungselements 302 gemäß einem vierten Ausführungsbeispiel der Erfindung bzw. teilweise geschnittene Seitenansichten des Befestigungselements 302 in einer ersten und einer zweiten Position. Das Befestigungselement 302 ist als Lastöse gestaltet und umfasst einen Bügel 320 und Rastelemente 322, welche jeweils verschwenkbar an einem Halteelement 321 angebracht sind. Das Halteelement 321 weist einen im Wesentlichen T-förmigen Querschnitt auf, wobei das Halteelement 321 über einen Längsbalken 324 der T-Form in eine in den Fig. 8 bis 10 nicht dargestellte Führungsschiene einsetzbar ist. Zum Einsetzen des Befestigungselements 302 in die nicht dargestellte Führungsschiene sind die Rastelemente 322 in die in Fig. 9 dargestellte, erste Position verschwenkbar. Zum Verschwenken der Rastelemente 322 ist in dem dargestellten Ausführungsbeispiel eine schematisch durch einen Pfeil dargestellte Kraft auf ein als Betätigungstaste 325 gestaltetes Bedienelement aufbringbar. Bei Wegfall der Kraft verschwenken die Rastelemente 322 in die in Fig. 10 dargestellte zweite Position. In anderen Ausgestaltungen werden die Rastelemente 322 durch Betätigen der Betätigungstaste 325 in die in Fig. 9 dargestellte erste Position verschwenkt und dort durch ein Schließelement, beispielsweise nach Art einer Schließfalle, gehalten. Auch bei Wegfall der Kraft bleiben die Rastelemente 322 dabei in der in Fig. 9 dargestellten Position. Durch ein Bedienelement ist das Schließelement entsperrbar. Als Bedienelement kann dabei in einer Ausgestaltung die Betätigungstaste 325 dienen, wobei durch erneutes Drücken der Betätigungstaste 325 die Rastelemente 322 wieder freigegeben werden und in die in Fig. 10 dargestellte Position verschwenken. Die Betätigungstaste 325 arbeitet dabei nach dem sogenannten push-push-Prinzip.

In einer Ausgestaltung der Erfindung sind die Rastelemente 322 durch nicht dargestellte Zwangselemente, beispielsweise durch Federn in Richtung der in Fig. 2 dargestellten zweiten Position vorgespannt, wobei durch Aufbringen einer Kraft gemäß Fig. 9 die Rastelemente 322 entgegen der Vorspannkraft in die in Fig. 9 dargestellte erste Position bewegbar sind. In der in Fig. 10 dargestellten, zweiten Position greifen an den Rastelementen 322 gebildete Rastnasen 323 in einen Hinterschnitt einer in Fig. 10 nicht dargestellten Führungsschiene, so dass das Befestigungselement 302 an der Führungsschiene arretierbar ist. Das Befestigungselement 302 ist an einer beliebigen Stelle entlang der Längsrichtung einer nicht dargestellten Führungsschiene einsetzbar.

Die dargestellten Rastelemente 322 weisen zusätzliche Rastvorsprünge 326 auf, welche in dazu komplementäre Kerben greifen können, welche an bevorzugten Raststellen an der Führungsschiene ausgeformt sind. Vorzugsweise ist das Befestigungselement 302 jedoch an einer beliebigen Stelle entlang der Längsrichtung einer Führungsschiene anbringbar.

Hierzu sind in anderen Ausführungsbeispielen die Rastelemente 322 ohne Rastvorsprünge 326 gestaltet.

Bei dem in den Fig. 8 bis 10 dargestellten Befestigungselement 302 sind zwei Rastelemente 322 vorgesehen, welche jeweils mit einer der zwei Schultern 10 einer beispielsweise in Fig. 1 dargestellten Führungsschiene 1 zusammenwirken. In anderen Ausgestaltungen der Erfindung kann nur ein durch eine Betätigungstaste 325 verschwenkbares Rastelement 322 vorgesehene sein. In wieder anderen Ausgestaltungen sind mehrere Rastelemente 322 wie dargestellt gegenüberliegend oder in Reihe an dem Betätigungselement 302 vorgesehen.

## Patentansprüche

1. Vorrichtung zum Befestigen von Ladegut in einem Transportmittel umfassend mindestens eine Führungsschiene (1, 101, 201) und mindestens ein an der Führungsschiene (1, 101, 201) anbringbares Befestigungselement (2, 102, 202, 302) mit einem Rastelement (22, 122, 222, 322), **dadurch gekennzeichnet, dass** die Führungsschiene (1, 101, 201) ein im Wesentlichen C-förmiges Profil mit zwei Schultern (10, 110, 210) und einer Nut (11, 111, 211) aufweist, das Rastelement (22, 122, 222, 322) in die Nut (11, 111, 211) einführbar ist und das in die Nut (11, 111, 211) eingeführte Rastelement (22, 122, 222, 322) um eine im Wesentlichen parallel zur Längsachse (L) der Führungsschiene (1, 101, 201) verlaufende Achse verschwenkbar ist, so dass zumindest eine Rastnase (23, 123, 223, 323) des Rastelements (22, 122, 222, 322) in einen durch mindestens eine der Schultern (10, 110, 210) gebildeten Hinterschnitt der Führungsschiene (1, 101, 201) greift und das Befestigungselement (2, 102, 202, 302) an der Führungsschiene (1, 101, 201) zumindest in eine Hochrichtung (H) der Führungsschiene (1, 101, 201) arretiert ist.

2. Vorrichtung nach Anspruch 1, **dadurch gekennzeichnet, dass** das Befestigungselement (2, 102, 202, 302) eine Lastöse ist.

3. Vorrichtung nach Anspruch 2, **dadurch gekennzeichnet, dass** das Rastelement (2, 102) einteilig mit einem Griffteil (20, 120) der Lastöse ausgebildet ist.

4. Vorrichtung nach Anspruch 1, 2 oder 3, **dadurch gekennzeichnet, dass** das Befestigungselement (102, 302) ein Halteelement (121, 321) aufweist, wobei das Rastelement (122, 322) schwenkbar an dem Halteelement (121, 321) gelagert ist.

5. Vorrichtung nach Anspruch 4, **dadurch gekennzeichnet, dass** das Haltelement (121, 321) mindestens einen Vorsprung (125) aufweist, welcher auf einer Außenseite mindestens einer Schulter (110) anliegt, wenn das Rastelement (122) in die Nut (11) eingeführt ist.

6. Vorrichtung nach Anspruch 4 oder 5, **dadurch gekennzeichnet, dass** das Halteelement (123) mindestens eine Haltenase (126) aufweist, durch welche das Halteelement (123) auf einen die Schulter (110) begrenzenden Rand (113) aufsteckbar ist.

7. Vorrichtung nach einem der Ansprüche 1 bis 5, **dadurch gekennzeichnet, dass** das Rastelement (222) nach Art einer Flunke eines Klappankers ausgebildet ist.

8. Vorrichtung nach Anspruch 7, **dadurch gekennzeichnet, dass** das Rastelement (222) zum Einführen in die Nut (211) und/oder zum Verschieben entlang der Nut (211) in einem Gehäuse (224) aufgenommen ist.

9. Vorrichtung nach einem der Ansprüche 1 bis 8, **dadurch gekennzeichnet, dass** das Rastelement (22, 122, 322, 422) zwischen einer ersten Position zum Einführen in die Nut (11, 211) und einer zweiten Position zum Hintergreifen des durch mindestens eine Schulter (10, 110, 210) gebildeten Hinterschnitts der Führungsschiene (1, 101, 201) verschwenkbar ist.

10. Vorrichtung nach Anspruch 9, **dadurch gekennzeichnet, dass** das Rastelement (222, 322) in mindestens einer Position durch ein Sicherungselement (224), insbesondere eine Schließfalle oder eine Feder, gesichert ist.

11. Vorrichtung nach Anspruch 10, **dadurch gekennzeichnet, dass** die Sicherung durch das Schließelement mittels eines Bedienelements, insbesondere mittels einer Betätigungstaste (325) oder dergleichen, aufhebbar ist.

12. Vorrichtung nach einem der Ansprüche 1 bis 11, **dadurch gekennzeichnet, dass** das Rastelement (322) mittels eines axial verschiebbaren Betätigungselements, insbesondere mittels einer Taste (325) oder dergleichen, verschwenkbar ist.
